# EUROPÄISCHE PATENTSCHRIFT

(11) **EP 1 809 058 B1**
(45) Veröffentlichungstag und Bekanntmachung des Hinweises auf die Patenterteilung: **28.05.2008**
(21) Anmeldenummer: 06290101.2
(22) Anmeldetag: 17.01.2006
(51) Int. Cl.: H04Q 7/36, H04Q 7/38

(54) **Verfahren zum Minimieren der Interferenz in einem zellulären OFDM Kommunikationssystem sowie Basisstation und Mobilstation hierfür**
Method, base station and mobile station to minimise the interference in a cellular OFDM communication system
Procédé, station de base et station mobile pour minimiser l'interférence dans un système de communication OFDM cellulaire

(43) Veröffentlichungstag der Anmeldung: 18.07.2007
(73) Patentinhaber: Alcatel Lucent, 75008 Paris (FR)
(72) Erfinder: Rheinshmitt, Rupert, 70825 Korntal (DE); Kaminski, Stephan, 73054 Eislingen (DE); Bakker, Hajo, 71735 Eberdingen (DE)
(74) Vertreter: Brose, Gerhard

(56) Entgegenhaltungen:
- EP-A- 1 526 674
- EP-A- 1 596 524
- US-A1- 2003 021 245

## Beschreibung

Die Erfindung betrifft ein Verfahren zum Minimieren der Interferenz in einem Kommunikationssystem nach dem Oberbegriff des Anspruchs 1, eine Basisstation nach dem Oberbegriff des Anspruchs 8 sowie eine Mobilstation nach dem Oberbegriff des Anspruchs 9.

OFDM-Luftschnittstellen (OFDM = Orthogonal Frequency Division Multiplexing) erlangen zunehmend Bedeutung z.B. für die zukünftige Entwicklung von Luftschnittstellen in 3GPP-Funkzugangsnetzen (3GPP = Third Generation Partnership Project), für drahtlose lokale Netze wie die sogenannten Wireless Local Area Networks (WLANs) gemäß dem Standard IEEE 802.11a oder für Luftschnittstellen der vierten Generation.

Die Leistungsfähigkeit eines zellulären OFDM-Systems kann durch Anwendung frequenzselektiver Algorithmen zur Ressourcenverteilung, wie z.B. adaptive Modulation, Unterträgerverteilung oder Leistungskontrolle erhöht werden. Um die Leistungsfähigkeit in Gebieten, in denen mit einer hohen Interferenz zu rechnen ist, zu erhöhen, kann zur Interferenzreduzierung das sogenannte Prinzip der Interferenzkoordination angewendet werden. Dies bedeutet, dass bestimmte Unterträger, die zum selben Frequenzmuster gehören, in einer Zelle nur mit reduzierter Sendeleistung verwendet werden. Diese Reduzierung der Sendeleistung führt zwar zu einer Verschlechterung der Leistungsfähigkeit in dem Gebiet der Zelle, allerdings ist in benachbarten Zellen die Interferenz für diese bestimmten Unterträger reduziert, was dort wiederum die Leistungsfähigkeit erhöht. Der Grad der Verschlechterung hängt ab vom Zustand der Funkkanäle der interferierenden Basisstationen und vom Frequenzmuster, das mit der reduzierten Leistung verwendet wird. Dieses Prinzip der Interferenzkoordination erfordert die Koordination zwischen den beteiligten Basisstationen. Andere Konzepte zur Interferenzreduzierung basieren z.B. auf dem Prinzip des sogenannten Frequency Hopping oder speziellen Kodierverfahren, wie z.B. den sogenannten Costas-Sequenzen.

Die herkömmlichen Verfahren zur Interferenzreduktion für OFDM Schnittstellen gehen mit einer Reduktion der Leistungsfähigkeit vor allem in den Randbereichen der Zelle einher. Costas-Sequenzen sind darüber hinaus nur in der Lage, den Einfluss der Interferenz zu minimieren, erlauben aber keine Anpassung oder Optimierung der momentanen Nutzung der Frequenzressourcen.

Das Dokument EP1596524 offenbart ein Verfahren zum Minimieren der Interferenz in einem zellulären OFDM Kommunikationsnetz (CN), wobei Mobilstationen, die einer Zelle zugeordnet sind, die Qualität der Funkkanäle und den Interferenzlevel als Funktion über den einzelnen Unterträgem messen und an die Basisstation der Zelle übermitteln und wobei die Qualität der Funkkanäle zu einem Funkqualitätsparameter für jede Mobilstation zusammengefasst wird.

Der Erfindung liegt die Aufgabe zugrunde, an der oben beschriebenen Situation Abhilfe zu schaffen und die Interferenz zwischen interferierenden Basisstationen zu minimieren, um eine optimale Leistungsfähigkeit aller Mobilstationen in Abhängigkeit von ihrem Aufenthaltsort zu erreichen, unter gleichzeitiger Minimierung der Interaktionen zwischen den Basisstationen.

Diese Aufgabe wird erfindungsgemäß gelöst durch ein Verfahren zum Minimieren der Interferenz in einem zellulären OFDM Kommunikationssystem nach der Lehre des Anspruchs 1 sowie eine Basisstation nach der Lehre des Anspruchs 8.

Die grundlegende Idee der Erfindung beruht auf der Tatsache, dass sowohl die Variation des Funkkanals, als auch der Interferenzlevel zum Rauschen in der zugehörigen Mobilstation beitragen. Wenn die Basisstation die Qualität des Funkkanals in Abhängigkeit von den einzelnen Unterträgern und das Rauschen in den einzelnen Mobilstationen kennt, dann kann die Basisstation herleiten, auf welchen Unterträgern die Übertragung voraussichtlich am besten ist. Darauf basierend kann eine generelle Optimierung durchgeführt werden mit dem Ziel, den Einfluss der Inter- und Intrazellinterferenzen zu reduzieren. Bei dem erfindungsgemäßen Verfahren, das auf dem Prinzip der Selbstadaption beruht, wird eine Adaption an sich dynamisch verändernde Interferenzsituationen, die z.B. mit der Auslastung, der Verteilung der Mobilstationen oder den Funkkanalbedingungen variieren, durchgeführt.

Die Interferenz kann auf ein Minimum reduziert werden, wenn das Wissen über die interferierenden Basisstationen und die Qualität des Funkkanals in der sendenden Basisstation zur Verfügung steht. Diese Informationen sind in mehreren möglichen Messungen z.B. des Signal-Rausch- oder des Signal-Interferenz-Verhältnis, der Kanaltransferfunktion oder der Stärke der interferierenden Signale enthalten.

Wenn die Mobilstationen solche Informationen über die interferierende Signalstärke, die Funkkanalqualität und Funkkanalcharakteristik zur Basisstation senden, dann kann die Basisstation die Situation bzgl. Interferenz und Funkkanalqualität für den Fall, dass ein bestimmtes Signal mit einer bestimmten Leistung zu einer Mobilstation gesendet wird, für alle Mobilstationen abschätzen und vorhersagen.

Zudem kann ein Schema angewendet werden, das sicherstellt, dass nicht das gesamte Band komplett durch einen einzigen Sender belegt wird. Dazu kann implementiert werden, dass eine Basisstation immer die maximale Sendeleistung für einen bestimmten Teil der Unterträger reduziert und dadurch eine Lücke im Spektrum der Unterträger erzeugt, die von anderen Basisstationen genutzt werden kann, um die ihnen zugeordneten Mobilstationen auf diesen Unterträgern zu erreichen. Dieses Schema ist besonders geeignet für OFDM-basierende Systeme, da die Unterträger individuell für jede Transmission ausgewählt werden können. Zusätzliche Maßnahmen zur Verhinderung von Oszillationen verursacht durch häufige Änderungen der Lücke im Spektrum der Unterträger können leicht implementiert werden.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert.

Figur 1 zeigt ein beispielhaftes zelluläres Kommunikationsnetz, in dem die Erfindung implementiert werden kann.

Figur 2 zeigt beispielhaft die Durchführung des erfindungsgemäßen Verfahrens mittels Senden von Informationen über Interferenzlevel und Qualität der Funkkanäle von den Mobilstationen an die Basisstation.

Figur 3 zeigt beispielhaft das Prinzip des erfindungsgemäßen Verfahrens für die Auswahl von Unterträgern, auf denen mit reduzierter Leistung gesendet werden soll.

Figur 4 zeigt schematisch die verschiedenen Level der Bearbeitung von Informationen über Interferenzlevel und Qualität der Funkkanäle.

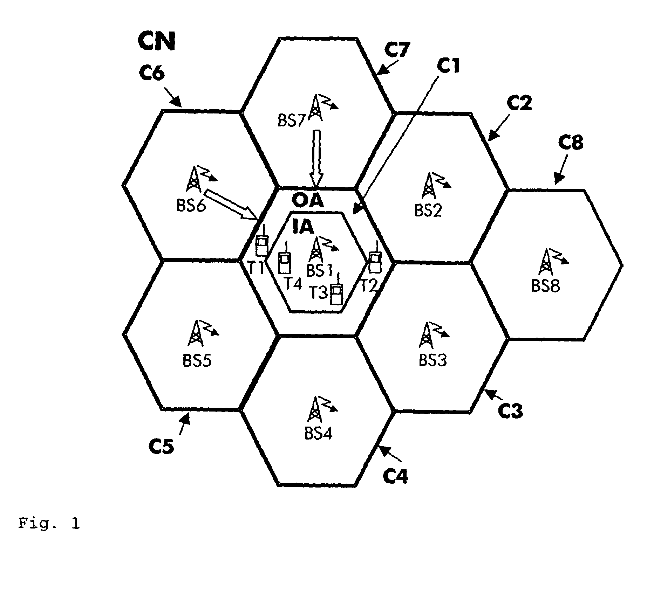

Das in Figur 1 dargestellte zelluläre Kommunikationsnetz CN ist exemplarisch in 8 Zellen C1-C8 aufgeteilt und beinhaltet exemplarisch 8 Basisstationen BS1-BS8 und 4 Mobilstationen T1-T4.

Jede der 8 Basisstationen BS1-BS8 versorgt die ihr jeweils zugeordnete Zelle C1-C8 und ermöglicht damit Mobilstationen, die sich in der zugeordneten Zelle C1-C8 aufhalten, den Datenaustausch.

Aus Gründen der Übersicht sind die Verbindungen der Basisstationen BS1-BS8 zu weiteren Elementen des Kommunikationsnetzwerks, wie z.B. Steuereinheiten, nicht in Figur 1 eingezeichnet.

Die Zelle C1 ist exemplarisch in einen Bereich OA, in dem sich die Mobilstationen T1, T2 mit schlechterer Qualität der Funkkanäle befinden und in einen Bereich IA, in dem sich die Mobilstationen T3, T4 mit besserer Qualität der Funkkanäle befinden, unterteilt. In der Regel ist der Bereich OA identisch mit dem äußeren Bereich der Zelle und der Bereich IA identisch mit dem inneren Bereich der Zelle.

Die Funkverbindung zwischen den Mobilstationen T1-T4 und der Basisstation BS1 wird durch die Interferenzen benachbarter Basisstationen BS2-BS8 gestört. Dies ist beispielhaft für die Zellen C6 und C7 durch breite Pfeile angedeutet.

Die Basisstationen BS1-BS8 beinhalten die Funktionalität von Basisstationen in einem zellulären Kommunikationsnetz, d.h. sie bieten Mobilstationen T1-T4 die Möglichkeit, mit dem Kommunikationsnetz CN verbunden zu werden.

Zudem weisen die erfindungsgemäßen Basisstationen BS1-BS8 Mittel auf, um Mobilstationen T1-T4 in Gruppen gemäss der Qualität der Funkkanäle zu unterteilen, um die Interferenzlevel von Mobilstationen T1, T2, die zu einer ersten Gruppe der Mobilstationen T1, T2 mit einer Qualität der Funkkanäle, die niedriger ist als die mindestens einer anderen Gruppe, gehören, zu einem gemeinsamen Interferenzlevel zu kombinieren, um die Unterträger des OFDM Kommunikationsnetzes CN in Mengen gemäss dem gemeinsamen Interferenzlevel der ersten Gruppe der Mobilstationen T1, T2 zu unterteilen, und um Unterträger, die zu einer ersten Menge mit einem gemeinsamen Interferenzlevel, der niedriger ist als der mindestens einer anderen Menge, gehören, als bevorzugte Unterträger für die Übertragung zu den Mobilstationen T1, T2, die zu der ersten Gruppe gehören, auszuwählen.

Die Mobilstationen T1-T4 beinhalten die Funktionalität von Mobilstationen in einem zellulären Kommunikationsnetz, d.h. die Mobilstationen T1-T4 können mittels einer Basisstation BS1 mit dem Kommunikationsnetz CN verbunden werden.

Zudem weisen die erfindungsgemäßen Mobilstationen T1-T4 Mittel auf, um die Qualität der Funkkanäle und den Interferenzlevel zu messen und an die Basisstation BS1 der ihr zugeordneten Zelle C1 zu übermitteln.

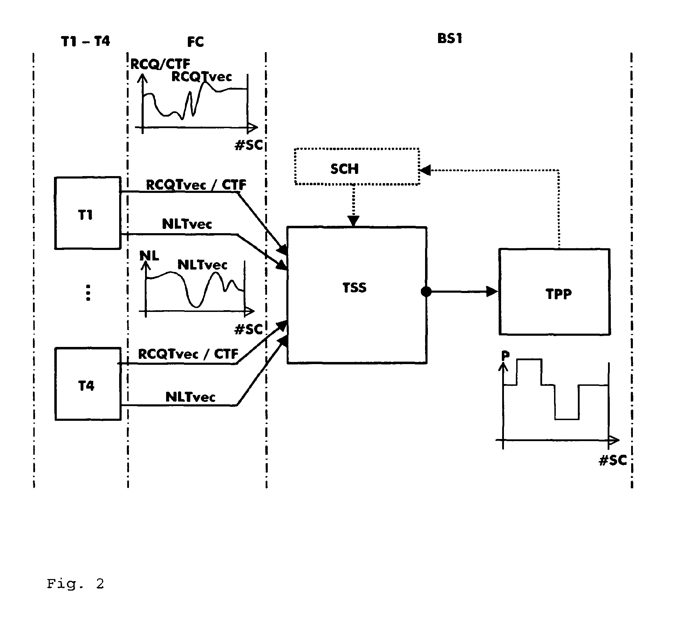

In Figur 2 ist beispielhaft die Durchführung des erfindungsgemäßen Verfahrens dargestellt. Das Verfahren ist dazu schematisch aus Gründen der Übersicht in drei Verfahrensschritte unterteilt, die durch senkrechte Strichpunkt-Linien abgegrenzt sind. Der erste Verfahrensschritt erstreckt sich auf die Mobilstationen T1-T4. Jede Mobilstation T1-T4 misst dabei die Qualität der Funkkanäle RCQTvec und den Interferenzlevel NLTvec als Funktion über den einzelnen Unterträgern SC.

Anschließend übermitteln im zweiten Verfahrensschritt, bei dem Feedback-Kanäle FC symbolisiert durch Pfeile verwendet werden, die Mobilstationen T1-T4 die Qualität der Funkkanäle RCQTvec z.B. in Form der sogenannten Channel Transfer Function CTF über die Feedback-Kanäle FC an die Basisstation BS1, auf die sich der dritte Verfahrensschritt bezieht.

Analog zur Übertragung der Qualität der Funkkanäle RCQTvec wird der Interferenzlevel NLTvec über die Feedback-Kanäle FC von den Mobilstationen T1-T4 an die Basisstation BS1 übermittelt.

In zwei Diagrammen sind beispielhaft die Qualität der Funkkanäle RCQTvec, wie sie z.B. durch die Channel Transfer Function CTF ausgedrückt wird, und der Interferenzlevel NLTvec jeweils über den Unterträgern SC aufgetragen.

Die Qualität der Funkkanäle RCQTvec wird dabei in der Regel mit sehr kurzer Wiederholungsrate, z.B. in jedem oder in jedem zweiten Transmission Time Interval (TTI) übertragen, wohingegen der Interferenzlevel NLTvec seltener, z.B. in jedem hundertsten Transmission Time Interval übertragen wird.

Im dritten Verfahrensschritt, der sich auf die Basisstation BS1 erstreckt, werden in der Basisstation BS1 im Modul für die Auswahl der Übertragungsleistung und der Unterträger TSS die Informationen über die Qualität der Funkkanäle RCQTvec und den Interferenzlevel NLTvec analysiert. Auf Grundlage der Analyse werden Unterträger SC zur Nutzung an die Mobilstationen T1-T4 zugewiesen.

In einer weiteren Ausführung wird auf Grundlage der Analyse ein Satz von Unterträgern SC im Modul für die Auswahl der Übertragungsleistung und der Unterträger TSS ausgewählt, der von der Basisstation BS1 mit modifizierter Übertragungsleistung P verwendet wird. Diese Modifikation der Übertragungsleistung P, d.h. eine Dämpfung oder Verstärkung, kann individuell pro Unterträger SC vorgenommen werden. Dieses Profil der Übertragungsleistung wird in der Basisstation BS1 in einem Speichermodul TPP gespeichert. Der beispielhafte Verlauf dieses Profils ist im Diagramm unterhalb des Speichermoduls TPP abgebildet. Dort ist die Übertragungsleistung P über den Unterträgern SC aufgetragen.

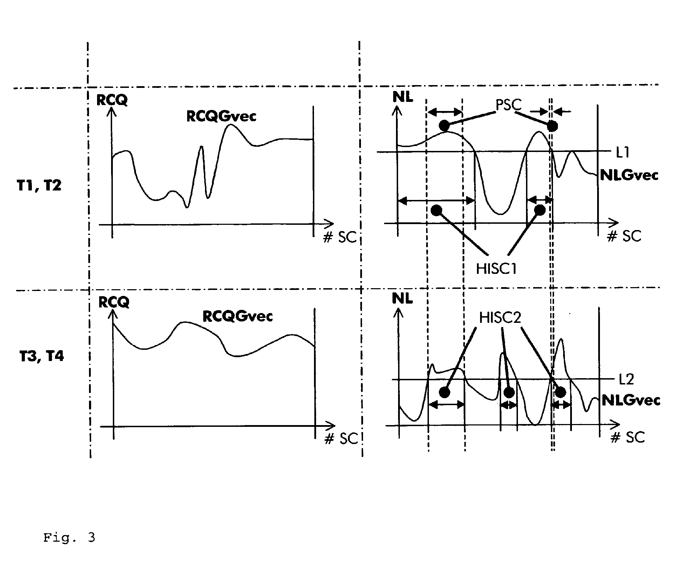

Im folgenden wird eine detailliertere Beschreibung des dritten Verfahrensschritts unter Zuhilfenahme von Figur 3 gegeben.

Die Mobilstationen T1-T4 werden gemäß ihrer Qualität der Funkkanäle RCQTvec, die z.B. durch Analyse der Channel Transfer Function CTF gewonnen wurde, im Modul für die Auswahl der Übertragungsleistung und der Unterträger TSS sortiert, wobei die Qualität der Funkkanäle RCQTvec vorzugsweise für jede Mobilstation T1-T4 gemitteltwird, so dass sich für jede Mobilstation T1-T4 ein Funkqualitätsparameter RCQT ergibt. Alternativ dazu kann die Qualität der Funkkanäle RCQTvec auch gewichtet zum Funkqualitätsparameter RCQT pro Mobilstation T1-T4 zusammengefasst werden. Die Anzahl an aktiven und berichtenden Mobilstationen T1-T4 wird in Gruppen gemäß dem Funkqualitätsparameter RCQT eingeteilt.

Die Größe der Gruppen kann dabei z.B. durch eine maximale Anzahl an Mobilstationen T1-T4 pro Gruppe oder einen prozentualen Anteil an der Gesamtanzahl an Mobilstationen T1-T4 bestimmt sein.

In Figur 3 ist die Einteilung der Mobilstationen T1-T4 gemäß dem Funkqualitätsparameter RCQT ersichtlich. Die obere Reihe bezieht sich dabei auf eine erste Gruppe von Mobilstationen T1, T2 mit einer schlechten mittleren Qualität der Funkkanäle, d.h. mit niedrigem Funkqualitätsparameter RCQT, und die untere Reihe bezieht sich dabei auf eine zweite Gruppe von Mobilstationen T3, T4 mit einer guten mittleren Qualität der Funkkanäle, d.h. mit hohem Funkqualitätsparameter RCQT. Für die beiden Gruppen ist beispielhaft in je einem Diagramm der Verlauf der gemeinsamen Qualität der Funkkanäle RCQGvec über den Unterträgern SC für die jeweilige Gruppe der Mobilstationen dargestellt. Die gemeinsame Qualität der Funkkanäle RCQGvec für eine Gruppe von Mobilstationen wird dabei durch gewichtete Zusammenfassung der Qualität der Funkkanäle RCQTvec der einzelnen Mobilstationen der jeweiligen Gruppe erreicht. Der Übersicht halber ist das in Figur 3 beschriebene Beispiel auf eine Einteilung der Mobilstationen T1-T4 gemäß dem Funkqualitätsparameter RCQT in zwei Gruppen beschränkt. Das Prinzip der Erfindung kann aber auf eine beliebige Anzahl an Gruppen erweitert werden.

Die Auswertung der Informationen über die Interferenzlevel NLTvec der einzelnen Mobilstationen T1-T4 erfolgt allerdings auf andere Art und Weise. Zuerst wird die Intra-Zell-Interferenz, die durch die Basisstation BS1 selbst verursacht wird und die bekannt ist, von dem berichteten Interferenzlevel NLTvec abgezogen, so dass man die reine Inter-Zell-Interferenz verursacht durch andere Basisstationen BS2-BS8 erhält. Anschließend werden die Level der Inter-Zell-Interferenzen der Mobilstationen T1, T2 der ersten Gruppe mit niedrigem Funkqualitätsparameter RCQT zu einem gemeinsamen Interferenzlevel NLGvec kombiniert, wobei bei der Kombination die Level der Inter-Zell-Interferenzen der einzelnen Mobilstationen T1, T2 unterschiedlich gewichtet werden können. Analog dazu werden auch die Level der Inter-Zell-Interferenzen der Mobilstationen T3, T4 der zweiten Gruppe mit hohem Funkqualitätsparameter RCQT zu einem gemeinsamen Interferenzlevel NLGvec kombiniert, wobei auch hier bei der Kombination die Level der Inter-Zell-Interferenzen der einzelnen Mobilstationen T1, T2 unterschiedlich gewichtet werden können. Dieser Interferenzlevel NLGvec ist in Figur 3 beispielhaft für die beiden Gruppen in je einem Diagramm über den Unterträgern SC aufgetragen.

Betrachtet man nun die Auswertung für die Mobilstationen T1, T2 der ersten Gruppe, so werden diejenigen Unterträger SC mit einem gemeinsamen Interferenzlevel NLGvec unter einem gewissen Schwellenwert L1 als bevorzugte Unterträger SC für die Übertragung zu den Mobilstationen T1, T2 von der Basisstation BS1 ausgewählt. Die Begründung für diese Auswahl liegt darin, dass Mobilstationen T1, T2 die weit entfernt von der Basisstation BS1 sind, in der Regel einen niedrigen Funkqualitätsparameter RCQT aufweisen. Solche Mobilstationen T1, T2 sollen von der Basisstation BS1 auf solchen Unterträgern bedient werden, die einen geringen gemeinsamen Interferenzlevel NLGvec aufweisen, um überhaupt eine Kommunikation zu ermöglichen.

Solche Unterträger SC mit einem gemeinsamen Interferenzlevel NLGvec unter dem Schwellenwert L1 werden sehr wahrscheinlich von anderen Basisstationen BS2-BS8 mit reduzierter Übertragungsleistung verwendet. Allerdings können auch andere Faktoren, wie ein hoher sogenannter Pathloss, d.h. Ausbreitungsverluste, in den benachbarten Zellen C2-C8 oder die Tatsache, dass nichts in den benachbarten Zellen auf diesen Unterträgern SC gesendet wird, zu dem geringen gemeinsamen Interferenzlevel NLGvec beitragen. Der Schwellenwert L1 und damit die Anzahl der Unterträger SC mit niedrigem gemeinsamen Interferenzlevel NLGvec kann dabei z.B. so gewählt werden, dass sich eine festgelegte Anzahl oder ein festegelegter Prozentsatz an Unterträgern SC mit niedrigem gemeinsamen Interferenzlevel NLGvec ergibt.

In einer vorteilhaften Ausführungsform bestimmt die Basisstation BS1 eine bestimmte Anzahl an bevorzugten Unterträgern für die Nutzung mit reduzierter Übertragungsleistung P während einer bestimmten Zeitspanne. Dazu wird die Auswertung des gemeinsamen Interferenzlevels NLGvec für die Mobilstationen T1, T2 der ersten Gruppe betrachtet und diejenigen Unterträger HISC1 mit einem gemeinsamen Interferenzlevel NLGvec über dem Schwellenwert L1 werden als bevorzugte Unterträger für die Übertragung mit reduzierter Übertragungsleistung P ausgewählt, da diese Unterträger HISC1 mit hohem gemeinsamen Interferenzlevel NLGvec wahrscheinlich in benachbarten Zellen C2-C8 verwendet werden und durch die innerhalb der Zelle C1 reduzierte Übertragungsleistung P die Interferenz in den benachbarten Zellen C2-C7 verringert wird.

In einer weiteren Ausführung wird die Auswahl der bevorzugten Unterträger für die Übertragung mit reduzierter Übertragungsleistung P mit Hilfe der Mobilstationen T3, T4 der zweiten Gruppe mit hohem Funkqualitätsparameter RCQT durchgeführt. Dabei werden nur solche Unterträger als bevorzugte Unterträger PSC für die Übertragung mit reduzierter Übertragungsleistung P ausgewählt, die nicht von den Mobilstationen T3, T4 der zweiten Gruppe bevorzugt verwendet werden.

Betrachtet man in Figur 3 die Auswertung des gemeinsamen Interferenzlevels NLGvec für die Mobilstationen T3, T4 der zweiten Gruppe, so werden analog wie bei den Mobilstationen T1, T2 der ersten Gruppe diejenigen Unterträger SC mit einem gemeinsamen Interferenzlevel NLGvec unter einem gewissen Schwellenwert L2 als bevorzugte Unterträger für die Übertragung zu den Mobilstationen T3, T4 von der Basisstation BS1 ausgewählt. Die Unterträger HISC2 mit einem gemeinsamen Interferenzlevel NLGvec über dem Schwellenwert L2 hingegen werden nicht bevorzugt für die Übertragung zu den Mobilstationen T3, T4 der zweiten Gruppe verwendet. Der Schwellenwert L2 und damit die Anzahl der Unterträger SC mit niedrigem gemeinsamen Interferenzlevel NLGvec kann dabei z.B. so gewählt werden, dass sich eine festgelegte Anzahl oder ein festegelegter Prozentsatz an Unterträgern SC mit niedrigem gemeinsamen Interferenzlevel NLGvec ergibt.

Die Unterträger HISC1 mit einem gemeinsamen Interferenzlevel NLGvec über dem Schwellenwert L1 werden nun mit den Unterträgern HISC2 mit einem gemeinsamen Interferenzlevel NLGvec über dem Schwellenwert L2 verglichen, und nur solche Unterträger werden als bevorzugte Unterträger PSC für die Übertragung mit reduzierter Übertragungsleistung P ausgewählt, die sowohl in der Menge der Unterträger HISC1, als auch in der Menge der Unterträger HISC2 enthalten sind. In Figur 3 sind die Unterträger HISC1 und HISC2 durch Doppelpfeile gekennzeichnet und durch durchgezogene Linien begrenzt, und die bevorzugten Unterträger PSC für die Übertragung mit reduzierter Übertragungsleistung P sind ebenfalls durch Doppelpfeile gekennzeichnet, aber durch gestrichelte Linien begrenzt.

In einer weiteren Ausführung werden die Unterträger HISC1 mit einem gemeinsamen Interferenzlevel NLGvec über dem Schwellenwert L1 mit den Unterträgern mit einem gemeinsamen Interferenzlevel NLGvec unter dem Schwellenwert L2 verglichen, und nur solche Unterträger werden als bevorzugte Unterträger PSC für die Übertragung mit reduzierter Übertragungsleistung P ausgewählt, die nur in der Menge der Unterträger HISC1, nicht aber in der Menge der Unterträger mit einem gemeinsamen Interferenzlevel NLGvec unter dem Schwellenwert L2 enthalten sind.

In einer weiteren Ausführung werden bevorzugte Unterträger PSC für die Übertragung mit reduzierter Übertragungsleistung P zufällig aus denjenigen Unterträgern ausgewählt, die nicht zur Menge der Unterträger SC mit einem gemeinsamen Interferenzlevel NLGvec unter dem Schwellenwert L1 gehören.

Die Basisstation BS1 wählt aus den bevorzugten Unterträgern PSC für die Übertragung mit reduzierter Übertragungsleistung P eine Anzahl an Unterträgern aus, die mit reduzierter Übertragungsleistung P verwendet werden.

In einer Ausführung wählt die Basisstation BS1 unter den bevorzugten Unterträgern PSC diejenigen Unterträger für die Nutzung mit reduzierter Übertragungsleistung P aus, die den höchsten gemeinsamen Interferenzlevel NLGvec besitzen.

In einer weiteren Ausführung wählt die Basisstation BS1 unter den bevorzugten Unterträgern PSC diejenigen Unterträger für die Nutzung mit reduzierter Übertragungsieistung aus, die die schlechteste gemeinsame Qualität der Funkkanäle RCQGvec aufweisen.

In einer weiteren Ausführung wird aus den bevorzugten Unterträgern PSC für die Übertragung mit reduzierter Übertragungsleistung P eine Anzahl an Unterträgern unter Berücksichtigung der Optimierung des Datendurchsatzes ausgewählt. In diesem Fall werden die bevorzugten Unterträgern PSC im Hinblick darauf untersucht, welchen Datendurchsatz sie liefern können. Die bevorzugten Unterträgern PSC mit dem geringsten zu erwartenden Datendurchsatz werden dann für die Übertragung mit reduzierter Übertragungsleistung P verwendet.

Die Messung des Interferenzlevels NLTvec ist nur auf Unterträgern möglich, auf denen die Mobilstationen T1-T4 Nutzdaten empfangen. In einer weiteren Ausführung wird deshalb zur Optimierung des erfindungsgemäßen Verfahrens durch ein Steuermodul SCH die Zuordnung der Unterträger SC zu den Mobilstationen T1-T4 so vorgenommen, dass die Mobilstationen T1-T4 zumindest einmal im Verlauf des Messintervalls des Interferenzlevels NLTvec Nutzdaten erhalten. In Figur 3 ist dargestellt, dass das Steuermodul SCH vom Speichermodul TPP das Profil der Übertragungsleistung aufgetragen über den Unterträgern SC erhält und Kontrollsignale zur Zuordnung der Unterträger SC zu den Mobilstationen T1-T4 an das Modul für die Auswahl der Übertragungsleistung und der Unterträger TSS schickt.

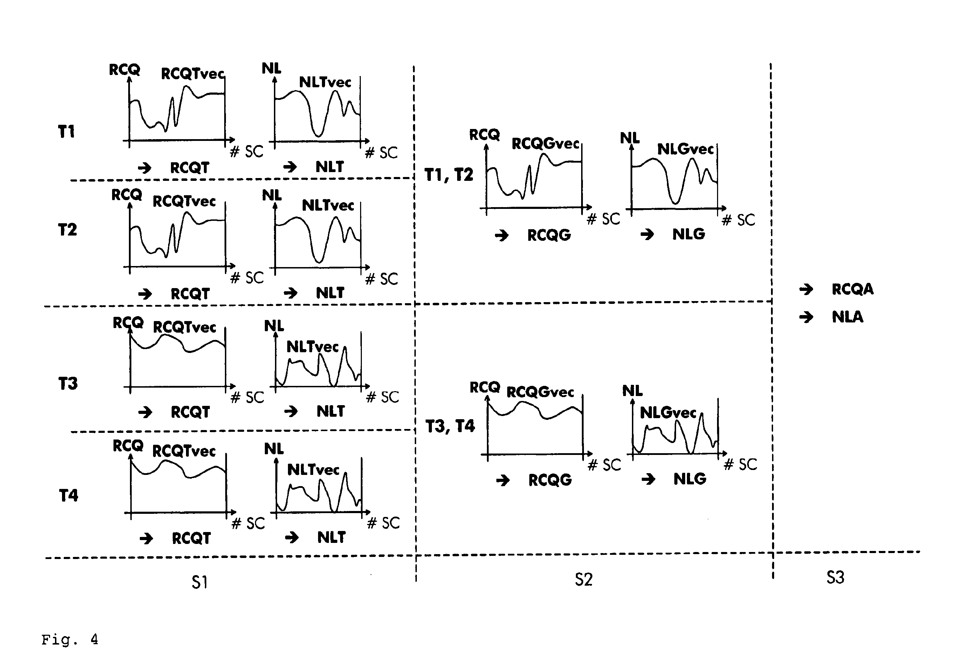

In Figur 4 sind der Übersicht halber die verschiedenen Level der Verarbeitung der Informationen über die Interferenzen und über die Qualität der Funkkanäle angegeben. Im ersten Level S1, der sich auf eine Auswertung pro Mobilstation bezieht, wird auf der Ebene der Mobilstationen T1-T4 die Qualität der Funkkanäle RCQTvec pro Mobilstation gemessen. In Figur 4 ist die Qualität der Funkkanäle RCQTvec für jede Mobilstation T1-T4 über den Unterträgern SC aufgetragen.

Für jede Mobilstation T1-T4 wird der Funkqualitätsparameter RCQT aus der Qualität der Funkkanäle der entsprechenden Mobilstation T1-T4 bestimmt.

Analog dazu wird der Interferenzlevel NLTvec pro Mobilstation gemessen, und dieser Wert ist pro Mobilstation T1-T4 über den Unterträgern SC aufgetragen.

In einer weiteren Ausführung wird für jede Mobilstation T1-T4 der Interferenzparameter NLT aus einer gewichteten Mittelung des Interferenzlevels NLTvec bestimmt.

Die Mobilstationen werden gemäß dem jeweiligen Funkqualitätsparameter RCQT in Gruppen eingeteilt, wie dies im zweiten Level an der Teilung in eine Gruppe mit den Mobilstationen T1 und T2 und in eine Gruppe mit den Mobilstationen T3 und T4 zu erkennen ist.

Im zweiten Level S2, der sich auf eine Auswertung innerhalb einer Gruppe von Mobilstationen bezieht, wird für jede Gruppe die gemeinsame Qualität der Funkkanäle RCQGvec aus der gewichteten Zusammenfassung der Qualität der Funkkanäle RCQTvec der einzelnen Mobilstationen der jeweiligen Gruppe bestimmt.

Analog wird für jede Gruppe der gemeinsame Interferenzlevel NLGvec aus der gewichteten Zusammenfassung der Interferenzlevel NLTvec der einzelnen Mobilstationen der jeweiligen Gruppe bestimmt.

Die gemeinsame Qualität der Funkkanäle RCQGvec und der gemeinsame Interferenzlevel NLGvec sind im Level S2 über den Unterträgern SC aufgetragen.

In einer weiteren Ausführung wird für jede Gruppe von Mobilstationen ein Gruppen-Funkqualitätsparameter RCQG aus der gewichteten Zusammenfassung der gemeinsamen Qualität der Funkkanäle RCQGvec über allen Unterträgern SC bestimmt.

Analog dazu wird für jede Gruppe von Mobilstationen ein Gruppen-Interferenzparameter NLG aus der gewichteten Zusammenfassung des gemeinsamen Interferenzlevels NLGvec über allen Unterträgern SC bestimmt.

In einer weiteren Ausführung wird schließlich, wie im Level S3 zu sehen, für alle Mobilstationen T1 - T4 in allen Gruppen ein globaler Funkqualitätsparameter RCQA aus der gewichteten Zusammenfassung der Gruppen-Funkqualitätsparameter RCQG aller Gruppen bestimmt.

Analog dazu wird für alle Mobilstationen T1 - T4 in allen Gruppen ein globaler Interferenzparameter NLA aus der gewichteten Zusammenfassung der Gruppen-Interferenzparameter NLG aller Gruppen bestimmt.

In einer weiteren Ausführung wird der Gruppen-Interferenzparameter NLG oder der globale Interferenzparameter NLA zur Festlegung des Schwellenwerts L1 oder L2 herangezogen.

## Patentansprüche

1. Verfahren zum Minimieren der Interferenz in einem zellulären OFDM Kommunikationsnetz (CN), mit
• Mobilstationen (T1 - T4), die einer Zelle (C1) zugeordnet sind, die Qualität der Funkkanäle (RCQTvec) und den Interferenzlevel (NLTvec) als Funktion über den einzelnen Unterträgern messen und an die Basisstation (BS1) der Zelle (C1) übermitteln, **dadurch gekennzeichnet, dass**
• die Qualität der Funkkanäle (RCQTvec) zu einem Funkqualitätsparameter (RCQT) für jede Mobilstation (T1 - T4) zusammengefasst wird,
• die Mobilstationen (T1 - T4) in Gruppen gemäss dem Funkqualitätsparameter (RCQT) unterteilt werden,
• die Interferenzlevel (NLTvec) von Mobilstationen (T1, T2), die zu einer ersten Gruppe der Mobilstationen (T1, T2) mit einem Funkqualitätsparameter (RCQT), der niedriger ist als der mindestens einer anderen Gruppe, gehören, zu einem gemeinsamen Interferenzlevel (NLGvec) kombiniert werden,
• die Unterträger (SC) des OFDM Kommunikationsnetzes (CN) in Mengen gemäss dem gemeinsamen Interferenzlevel (NLGvec) der ersten Gruppe der Mobilstationen (T1, T2) unterteilt werden,
• und Unterträger (SC), die zu einer ersten Menge mit einem gemeinsamen Interferenzlevel (NLGvec), der niedriger ist als der mindestens einer anderen Menge, gehören, als bevorzugte Unterträger für die Übertragung zu den Mobilstationen (T1, T2), die zu der ersten Gruppe gehören, ausgewählt werden.

2. Verfahren nach Anspruch 1, **dadurch gekennzeichnet, dass** Unterträger (SC), die zu einer zweiten Menge mit einem gemeinsamen Interferenzlevel (NLGvec) gehören, der höher ist als der gemeinsame Interferenzlevel (NLGvec) von Unterträgern der ersten Menge, als bevorzugte Unterträger (PSC) für die Nutzung mit reduzierter Übertragungsleistung (P) ausgewählt werden.

3. Verfahren nach Anspruch 1, **dadurch gekennzeichnet, dass**
• die Interferenzlevel (NLTvec) von Mobilstationen (T3, T4), die zu einer zweiten Gruppe der Mobilstationen (T3, T4) mit einem Funkqualitätsparameter (RCQT), der höher ist als der der ersten Gruppe, gehören, zu einem gemeinsamen Interferenzlevel (NLGvec) der zweiten Gruppe der Mobilstationen (T3, T4) kombiniert werden,
• die Unterträger (SC) des OFDM Kommunikationsnetzes (CN) in Mengen gemäss dem gemeinsamen Interferenzlevel (NLGvec) der zweiten Gruppe der Mobilstationen (T3, T4) unterteilt werden,
• Unterträger (SC), die zu einer Menge mit einem gemeinsamen Interferenzlevel (NLGvec) der zweiten Gruppe der Mobilstationen (T3, T4) gehören, der niedriger ist als der gemeinsame Interferenzlevel (NLGvec) mindestens einer anderen Menge, mit Unterträgern (SC), die zu einer Menge mit einem gemeinsamen Interferenzlevel (NLGvec) der ersten Gruppe der Mobilstationen (T1, T2) gehören, der höher ist als der gemeinsame Interferenzlevel (NLGvec) von Unterträgern (SC) mindestens einer anderen Menge, verglichen werden,
• und diejenigen Unterträger (SC) als bevorzugte Unterträger (PSC) für die Nutzung mit reduzierter Übertragungsleistung (P) ausgewählt werden, die nur der Menge mit einem gemeinsamen Interferenzlevel (NLGvec) der ersten Gruppe der Mobilstationen (T1, T2), der höher ist als der gemeinsame Interferenzlevel (NLGvec) von Unterträgern mindestens einer anderen Menge, angehören.

4. Verfahren nach Anspruch 1, **dadurch gekennzeichnet, dass**
• die Interferenzlevel (NLTvec) von Mobilstationen (T3, T4), die zu einer zweiten Gruppe der Mobilstationen (T3, T4) mit einem Funkqualitätsparameter (RCQT), der höher ist als der der ersten Gruppe, gehören, zu einem gemeinsamen Interferenzlevel (NLGvec) der zweiten Gruppe der Mobilstationen (T3, T4) kombiniert werden,
• die Unterträger (SC) des OFDM Kommunikationsnetzes (CN) in Mengen gemäss dem gemeinsamen Interferenzlevel (NLGvec) der zweiten Gruppe der Mobilstationen (T3, T4) unterteilt werden,
• Unterträger (SC), die zu einer Menge mit einem gemeinsamen Interferenzlevel (NLGvec) der zweiten Gruppe der Mobilstationen (T3, T4) gehören, der höher ist als der gemeinsame Interferenzlevel (NLGvec) mindestens einer anderen Menge, mit Unterträgern (SC), die zu einer Menge mit einem gemeinsamen Interferenzlevel (NLGvec) der ersten Gruppe der Mobilstationen (T1, T2) gehören, der höher ist als der gemeinsame Interferenzlevel (NLGvec) von Unterträgern mindestens einer anderen Menge, verglichen werden,
• und diejenigen Unterträger (SC) als bevorzugte Unterträger (PSC) für die Nutzung mit reduzierter Übertragungsleistung ausgewählt werden, die beiden Mengen angehören.

5. Verfahren nach Anspruch 1, **dadurch gekennzeichnet, dass** Unterträger (SC) für die Nutzung mit reduzierter Übertragungsleistung zufällig aus den Unterträgern ausgewählt werden, die nicht zu der ersten Menge gehören.

6. Verfahren nach Anspruch 2, 3 oder 4, **dadurch gekennzeichnet, dass** unter den bevorzugten Unterträgern (PSC) diejenigen Unterträger für die Nutzung mit reduzierter Übertragungsleistung ausgewählt werden, die den höchsten gemeinsamen Interferenzlevel (NLGvec) besitzen.

7. Verfahren nach Anspruch 2, 3 oder 4, **dadurch gekennzeichnet, dass** unter den bevorzugten Unterträgern (PSC) diejenigen Unterträger für die Nutzung mit reduzierter Übertragungsleistung ausgewählt werden, die die schlechteste gemeinsame Qualität der Funkkanäle (RCQGvec) aufweisen.

8. Basisstation (BS1-BS8) in einem zellulären OFDM Kommunikationsnetz (CN), **dadurch gekennzeichnet, dass** die Basisstation (BS1-BS8) Mittel aufweist,
• um die Qualität von Funkkanälen (RCQTvec) zu einem Funkqualitätsparameter (RCQT) für eine Mobilstation (T1 - T4) zusammenzufassen,
• um Mobilstationen (T1 - T4) in Gruppen gemäss dem Funkqualitätsparameter (RCQT) (RCQT) zu unterteilen,
• um die Interferenzlevel (NLTvec) von Mobilstationen (T1, T2), die zu einer ersten Gruppe der Mobilstationen (T1, T2) mit einem Funkqualitätsparameter (RCQT) (RCQT), der niedriger ist als der mindestens einer anderen Gruppe, gehören, zu einem gemeinsamen Interferenzlevel (NLGvec) zu kombinieren,
• um die Unterträger (SC) des OFDM Kommunikationsnetzes (CN) in Mengen gemäss dem gemeinsamen Interferenzlevel (NLGvec) der ersten Gruppe der Mobilstationen (T1, T2) zu unterteilen,
• und um Unterträger (SC), die zu einer ersten Menge mit einem gemeinsamen Interferenzlevel (NLGvec), der niedriger ist als der mindestens einer anderen Menge, gehören, als bevorzugte Unterträger (PSC) für die Übertragung zu den Mobilstationen (T1, T2), die zu der ersten Gruppe gehören, auszuwählen.

## Claims

1. Method for minimising interference in a cellular OFDM communication network (CN), **characterised in that**
- mobile stations (T1-T4) allocated to a cell (C1) measure the radio channel quality (RCQTvec) and the interference level (NLTvec) as a function of the individual sub-carriers and transmit these to the base station (BS1) of the cell (C1),
- the radio channel quality (RCQTvec) is combined into a radio quality parameter (RCQT) for each mobile station (T1-T4),
- the mobile stations (T1-T4) are divided into groups according to the radio quality parameter (RCQT),
- the interference level (NLTvec) of mobile stations (T1, T2) which belong to a first group of mobile stations (T1, T2) with a radio quality parameter (RCQT) that is lower than that of at least one other group, are combined into a common interference level (NLGvec),
- the sub-carriers (SC) of the OFDM communication network (CN) are divided into quantities according to the common interference level (NLGvec) of the first group of mobile stations (T1, T2),
- and sub-carriers (SC) which belong to a first quantity with a common interference level (NLGvec) which is lower than that of at least one other quantity, are selected as preferred sub-carriers for transmission to the mobile stations (T1, T2) which belong to the first group.

2. Method according to claim 1, **characterised in that** sub-carriers (SC) which belong to a second quantity with a common interference level (NLGvec) which is higher than the common interference level (NLGvec) of sub-carriers of the first quantity, are selected as preferred sub-carriers (PSC) for use with reduced transmission power (P).

3. Method according to claim 1, **characterised in that**
- the interference level (NLTvec) of mobile stations (T3, T4) which belong to a second group of mobile stations (T3, T4) with a radio quality parameter (RCQT) that is higher than that of the first group, are combined into a common interference level (NLgvec) of the second group of mobile stations (T3, T4),
- the sub-carriers (SC) of the OFDM communication network (CN) are divided into quantities according to the common interference level (NLGvec) of the second group of mobile stations (T3, T4),
- sub-carriers (SC) which belong to a quantity with a common interference level (NLGvec) of the second group of mobile stations (T3, T4) which is lower than the common interference level (NLGvec) of at least one other quantity, are compared with sub-carriers (SC) which belong to a quantity with a common interference level (NLGvec) of the first group of mobile stations (T1, T2) that is higher than the common interference level (NLGvec) of sub-carriers (SC) of at least one other quantity,
- and selected as preferred sub-carriers (PSC) for use with reduced transmission power (P) are those sub-carriers (SC) which belong only to the quantity with a common interference level (NLGvec) of the first group of mobile stations (T1, T2) that is higher than the common interference level (NLGvec) of sub-carriers of at least one other quantity.

4. Method according to claim 1, **characterised in that**
- the interference level (NLTvec) of mobile stations (T3, T4) which belong to a second group of mobile stations (T3, T4) with a radio quality parameter (RCQT) that is higher than that of the first group are combined into a common interference level (NLGvec) of the second group of mobile stations (T3, T4),
- the sub-carriers (SC) of the OFDM communication network (CN) are divided into quantities according to the common interference level (NLGvec) of the second group of mobile stations (T3, T4),
- sub-carriers (SC) which belong to a quantity with a common interference level (NLGvec) of the second group of mobile stations (T3, T4) which is higher than the common interference level (NLGvec) of at least one other quantity, are compared with sub-carriers (SC) which belong to a quantity with a common interference level (NLGvec) of the first group of mobile stations (T1, T2) that is higher than the common interference level (NLGvec) of sub-carriers (SC) of at least one other quantity,
- and selected as preferred sub-carriers (PSC) for use with reduced transmission power are those sub-carriers (SC) which belong to both quantities.

5. Method according to claim 1, **characterised in that** the sub-carriers (SC) for use with reduced transmission power are selected at random from sub-carriers which do not belong to a first quantity.

6. Method according to claim 2, 3 or 4, **characterised in that** from the preferred sub-carriers (PSC) are selected for use with reduced transmission power those sub-carriers which have the highest common interference level (NLGvec).

7. Method according to claim 2, 3 or 4, **characterised in that** from the preferred sub-carriers (PSC) are selected for use with reduced transmission power those sub-carriers which have the poorest common radio channel quality (RCQGvec).

8. Base station (BS1-BS8) in a cellular OFDM communication network (CN), **characterised in that** the base station (BS1-BS8) has means for
- combining the radio channel quality (RCQTvec) into a radio quality parameter (RCQT) for a mobile station (T1-T4),
- dividing the mobile stations (T1-T4) into groups according to the radio quality parameter (RCQT),
- combining the interference level (NLTvec) of mobile stations (T1, T2) which belong to a first group of mobile stations (T1, T2) with a radio quality parameter (RCQT) that is lower than that of at least one other group, into a common interference level (NLGvec),
- dividing the sub-carriers (SC) of the OFDM communication network (CN) into quantities according to the common interference level (NLGvec) of the first group of mobile stations (T1, T2),
- and selecting sub-carriers (SC) which belong to a first quantity with a common interference level (NLGvec) which is lower than that of at least one other quantity, as preferred sub-carriers (PSC) for the transmission to the mobile stations (T1, T2) which belong to the first group.

## Revendications

1. Procédé destiné à réduire au maximum les interférences dans un réseau de communication OFDM cellulaire (CN), doté de
· stations mobiles (T1 - T4) allouées à une cellule (C1) qui mesurent la qualité des canaux radio (RCQTvec) et le niveau d'interférences (NLTvec) comme fonction par l'intermédiaire des différents sous-supports et transmettent à la station de base (BS1) de la cellule (C1).
**caractérisé en ce que**
· la qualité des canaux radio (RCQTvec) est résumée à un paramètre de qualité radio (RCQT) pour chaque station mobile (T1 - T4),
· les stations mobiles (T1 - T4) sont subdivisées en groupes conformément au paramètre de qualité radio (RCQT),
· les niveaux d'interférences (NLTvec) des stations mobiles (T1, T2) qui font partie d'un premier groupe de stations mobiles (T1, T2) doté d'un paramètre de qualité radio (RCQT) qui est plus bas que celui au moins d'un autre groupe, sont combinés à un niveau d'interférences commun (NLGvec),
· les sous-supports (SC) du réseau de communication OFDM (CN) sont subdivisés en ensembles conformément au niveau d'interférences commun (NLGvec) du premier groupe de stations mobiles (T1, T2),
· et les sous-supports (SC) qui font partie d'un premier ensemble doté d'un niveau d'interférences commun (NLGvec) qui est plus bas que celui d'au moins un autre ensemble, est choisi comme sous-supports préférés pour la transmission aux stations mobiles (T1, T2) qui font partie du premier groupe.

2. Procédé selon la revendication 1, **caractérisé en ce que** les sous-supports (SC) qui font partie d'un second ensemble doté d'un niveau d'interférences commun (NLGvec), qui est plus élevé que un niveau d'interférences commun (NLGvec) des sous-supports du premier ensemble, sont choisis comme sous-supports préférés (PSC) pour l'utilisation avec une puissance de transmission réduite (P).

3. Procédé selon la revendication 1, **caractérisé en ce que**
· les niveaux d'interférences (NLTvec) des stations mobiles (T3, T4) qui font partie d'un second groupe de stations mobiles (T3, T4) doté d'un paramètre de qualité radio (RCQT) qui est plus élevé que celui du premier groupe, sont combinés à un niveau d'interférences commun (NLGvec) du second groupe de stations mobiles (T3, T4),
· les sous-supports (SC) du réseau de communication OFDM (CN) est subdivisé en ensembles conformément au niveau d'interférences commun (NLGvec) du second groupe de stations mobiles (T3, T4),
· les sous-supports (SC) qui font partie d'un ensemble doté d'un niveau d'interférences commun (NLGvec) du second groupe de stations mobiles (T3, T4), qui est plus bas que le niveau d'interférences commun (NLGvec) au moins d'un autre ensemble, sont comparés avec des sous-supports (SC) qui font partie d'un ensemble doté d'un niveau d'interférences commun (NLGvec) du premier groupe de stations mobiles (T1, T2), qui est plus élevé que le niveau d'interférences commun (NLGvec) des sous-supports (SC) au moins d'un autre ensemble
· et seuls sont choisis comme sous-supports préférés (PSC) pour l'utilisation avec une puissance de transmission réduite (P) les sous-supports (SC) qui appartiennent à l'ensemble doté d'un niveau d'interférences commun (NLGvec) du premier groupe de stations mobiles (T1, T2), qui est plus élevé que le niveau d'interférences commun (NLGvec) des sous-supports au moins d'un autre ensemble.

4. Procédé selon la revendication 1, **caractérisé en ce que**
· les niveaux d'interférences (NLTvec) des stations mobiles (T3, T4) qui font partie d'un second groupe de stations mobiles (T3, T4) doté d'un paramètre de qualité radio (RCQT) qui plus élevé que celui du premier groupe, sont combinés à un niveau d'interférences commun (NLGvec) du second groupe de stations mobiles (T3, T4),
· les sous-supports (SC) du réseau de communication OFDM (CN) sont subdivisés en ensembles conformément au niveau d'interférences commun (NLGvec) du second groupe de stations mobiles (T3, T4),
· les sous-supports (SC) qui font partie d'un ensemble doté d'un niveau d'interférences commun (NLGvec) du second groupe de stations mobiles (T3, T4) qui est plus élevé que le niveau d'interférences commun (NLGvec) au moins d'un autre ensemble, est comparé aux sous-supports (SC) qui font partie d'un ensemble doté d'un niveau d'interférences commun (NLGvec) du premier groupe de stations mobiles (T1, T2), qui est plus élevé que le niveau d'interférences commun (NLGvec) des sous-supports au moins d'un autre ensemble.
· et sont choisis comme sous-supports préférés (PSC) pour l'utilisation avec une puissance de transmission réduite les sous-supports (SC) qui appartiennent aux deux ensembles.

5. Procédé selon la revendication 1, **caractérisé en ce que** les sous-supports (SC) pour l'utilisation avec une puissance de transmission réduite sont choisis de façon fortuite dans les sous-supports qui ne font pas partie du premier ensemble.

6. Procédé selon la revendication 2, 3 ou 4, **caractérisé en ce que** les sous-supports pour l'utilisation avec une puissance de transmission réduite sont choisis parmi les sous-supports préférés (PSC) qui possèdent le niveau d'interférences commun le plus élevé (NLGvec).

7. Procédé selon la revendication 2, 3 ou 4, **caractérisé en ce que** les sous-supports pour l'utilisation avec une puissance de transmission réduite sont choisis parmi les sous-supports préférés (PSC) qui présentent la plus mauvaise qualité commune de canaux radio (RCQGvec).

8. Station de base (BS1-BS8) dans un réseau de communication OFDM cellulaire (CN), **caractérisé en ce que** la station de base (BS1-BS8) présente des moyens,
· pour résumer la qualité des canaux radio, (RCQTvec) à un paramètre de qualité radio (RCQT) pour une station mobile (T1 T4),
· pour subdiviser les stations mobiles (T1 - T4) en groupes conformément au paramètre de qualité radio (RGQT) (RCQT),
· pour combiner les niveaux d'interférences (NLTvec) des stations mobiles (T1, T2) qui font partie d'un premier groupe de stations mobiles (T1, T2) avec un paramètre de qualité radio (RCQT) (RCQT) qui est plus bas que celui au moins d'un autre groupe, à un niveau d'interférences commun (NLGvec),
· pour subdiviser les sous-supports (SC) du réseau de communication OFDM (CN) en ensembles conformément au niveau d'interférences commun (NLGvec) du premier groupe de stations mobiles (T1, T2),
· et pour choisir les sous-supports (SC) qui font partie d'un premier ensemble doté d'un niveau d'interférences commun (NLCvec) qui est plus bas que celui au moins d'un autre ensemble, comme sous-supports préférés (PSC) pour la transmission aux stations mobiles (T1, T2) qui font partie du premier groupe.
